# EUROPEAN PATENT APPLICATION

(11) **EP 4 834 114 A1**
(43) Date of publication of application: **04.11.2026**
(21) Application number: 25173686.4
(22) Date of filing: 30.04.2025
(51) Int. Cl.: A22C 11/02

(54) **HYGIENIC SAUSAGE CASING BRAKE ASSEMBLY**

(71) Applicant: Poly-clip System GmbH & Co. KG, 65795 Hattersheim (DE)
(72) Inventor: Butschan, Jens, 65719 Hofheim a. T. (DE); Netz, Marcel, 65929 Frankfurt (DE); Münker, Udo, 63505 Langenselbold (DE); Zurwieden, Martin, Libertyville IL, 60048 (US)
(74) Representative: Eisenführ Speiser

(57) **Abstract**

The invention defines a clipping machine for producing sausage-shaped products, like sausages according to the invention. The filling assembly comprises a filling tube with a filling tube axis, a filling tube inlet end portion end portion and a filling tube outlet end portion end portion for filling paste-like, granular and/or liquid material, in a filling process, in a feeding direction into a substantially tubular or bag-shaped packaging casing, wherein a packaging casing to be filled is configured to be arranged onto the filling tube and the filling tube is configured to be moved reversibly between a filling position and a casing reload position. The filling assembly further includes a casing brake unit with a brake axis and a brake body for being detachably arranged on the filling tube in a filling position wherein the brake body is relatively fixable to the filling tube outlet end portion end portion in the filling position and the casing brake unit is axially moveable along the brake axis in order to reversibly move between the filling position and the casing reload position, a mounting unit configured to mount the filling tube and the casing brake unit to the clipping machine and, a moving device configured to be operated manually for reversibly moving the filling tube and the casing brake unit relative to the clipping machine. When in the filling position, the filling tube and the casing brake unit are arranged coaxially. For attaining the casing reload position, the filling tube is configured to pivot from the clipping machine around a pivot axis and the brake unit is configured to carry out a linear movement along the filling axis. The moving device comprises operating means which are arranged adjacent the filling tube inlet end portion end portion.

## Description

In practice, it is known that during the manufacture of sausage-shaped products, like sausages, on a clipping machine, paste-like, granular and/or liquid material is fed from a filling tube with a filling pressure in a feeding direction into a tubular or bag-shaped packaging casing. The packaging casing is stored on the filling tube and closed at its front end, i.e. the end pointing in or downstream the feeding direction. During the filling process, the packaging casing is pulled-off the filling tube by the filling pressure. For preventing the tubular or bag-shaped packaging casing from uncontrolled sliding-off the filling tube, a casing brake unit with a brake body is provided wherein the brake body is detachably arranged on the filling tube. The brake body is configured for providing a frictional force to the packaging casing at least while the packaging casing is being pulled-off the filling tube. After a determined volume of filling material has been filled into the packaging casing, a displacer unit forms a plait-like portion to a back end of the filled packaging casing that is pointing against or upstream the feeding direction. Subsequently, the back end is being closed by a clipping unit by placing and closing at least one closure clip at the plait-like portion. Optionally, in a final step the sausage-shaped product that just has been closed is cut-off the packaging casing provided on the filling tube by a cutting unit.

The diameter of the sausage-shaped product to be produced defines the outer diameter of the filling tube and the inner diameter of the brake body, respectively. Therefore, in order to produce sausage-shaped products of different diameters, different filling tubes with corresponding outer diameters and brake bodies with corresponding inner diameters have to be used. Accordingly, for switching production to sausage-shaped products that have a diameter different from the previously produced sausage-shaped products, at least the previously used filling tube has to be replaced by a suitable filling tube having a compatible diameter to the sausage-shaped products to be produced. Furthermore, either the previously used brake body is not compatible with the suitable filling tube and has to be replaced by a suitable brake body or the previously used brake body has an adjustable inner diameter that can be fitted the selected filling tube, respectively.

Beyond that, the packaging casing has to be replaced when the previous one has been consumed. The packaging casing has to be imposed on the filling tube from its non-closed end, i.e. the end of the filling tube facing in the feeding direction of the filling material and having a filling outlet. Therefore, the operator needs an easy access to this filling tube end.

In clipping machines known in the practice, for removing the filling tube from the clipping machine and/or feeding packaging casing to the filling tube, the brake body has to be removed or disassembled from the filling tube first. After replacement of the filling tube and/or feeding packaging casing to the filling tube, the brake body has to be reassembled to the filling tube again. In some types of filling machines the displacer unit and/or the clipping unit are arranged so close to the brake body that they have to be moved aside first before the brake body can be removed or disassembled from the filling tube. Such replacement procedures are relatively complicated and time-consuming and will consequently cause unwanted production down-time. Dependent on the production speed, the casing reload must be done frequently which requires the continuous presence of an operator at the clipping machine.

In other types clipping machines known in the practice, the brake body is provided at the clipping unit of the clipping machine, wherein the clipping unit is pivotally arranged at the clipping machine. Furthermore, the end of the filling tube that is opposite to the filling outlet, is pivotally arranged at the clipping machine. Consequently, the filling tube and clipping unit can pivot relatively to the clipping machine around different pivot-axes. For replacing the filling tube and/or feeding packaging casing to the filling tube, the clipping unit with the brake body has to be pivoted, thus removing the brake body from the filling tube. Subsequently or simultaneously, the filling tube can be pivoted away from the clipping machine to a suitable position for replacing the filling tube and/or feeding packaging casing to the filling tube. This procedure is generally complicated and may cause damages to the brake body due to a tilt action with the filling tube.

In another type of clipping machines known in the practice, the clipping unit and a brake body holder are fixedly attached to the clipping machine. The filling tube is pivotally attached at the clipping machine. The brake body holder comprises a guide rail for holding the brake body on the filling tube when the filling tube is not pivoted away from the clipping machine. The guide rail of the brake body holder is usually shaped like a fork, comprising at least two teeth, wherein the brake body is interposed in between the two teeth when the brake holder is arranged on the filling tube and the filling tube is not pivoted away from the clipping machine. Consequently, the brake body holder is configured for releasing the brake body when the filling tube with the brake body still mounted, is pivoted away from the clipping machine. Once the filling tube is pivoted away from the clipping machine, the brake body can be removed from the filling tube along the filling tube axis. The whole process, especially the mounting process of the brake body onto the filling tube and the engaging process the brake body with the brake body holder while pivoting the filling tube back towards the clipping machine, is very cumbersome and time consuming.

It is therefore an object of the present invention to provide a filling assembly for being reversibly mounted to a clipping machine that allows an easy and fast access to the filling tube for reloading the packaging casing as well as enhance the cleaning process and the usability, thus reducing work load for the operator of the clipping machine and minimizing production down-time.

This objective is achieved by a filling assembly for being mounted to a clipping machine for producing sausage-shaped products, like sausages according to the invention. The filling assembly comprises a filling tube with a filling tube axis, a filling tube inlet end portion end portion and a filling tube outlet end portion end portion for filling paste-like, granular and/or liquid material, in a filling process, in a feeding direction into a substantially tubular or bag-shaped packaging casing, wherein a packaging casing to be filled is configured to be arranged onto the filling tube and the filling tube is configured to be moved reversibly between a filling position and a casing reload position. The filling assembly further includes a casing brake unit with a brake axis and a brake body for being detachably arranged on the filling tube in a filling position wherein the brake body is relatively fixable to the filling tube outlet end portion end portion in the filling position and the casing brake unit is axially moveable along the brake axis in order to reversibly move between the filling position and the casing reload position, a mounting unit configured to mount the filling tube and the casing brake unit to the clipping machine and, a moving device configured to be operated manually for reversibly moving the filling tube and the casing brake unit relative to the clipping machine. When in the filling position, the filling tube and the casing brake unit are arranged coaxially. For attaining the casing reload position, the filling tube is configured to pivot from the clipping machine around a pivot axis and the brake unit is configured to carry out a linear movement along the filling axis. The moving device comprises operating means which are arranged adjacent the filling tube inlet end portion end portion.

Preferably, the moving device is configured to reduce or multiply a movement of the operating means into a movement of the casing brake unit. This arrangement has the beneficial effect that less force is required from an operator to operate the filling assembly from the filling position to the casing reload position, allowing for a more ergonomic work.

Selectively, the operating means are configured to carry out an arc-like movement for reversibly bringing the casing brake unit from the filling position to the casing reload position.

In a more preferred embodiment of the invention, the moving device is configured to define the movement of the casing brake unit or the filling tube and the casing brake unit.

Advantageously the operating means extends at least approximately parallel to the filling tube in the filling position and, wherein the operating means and the filling tube are configured to move at last approximately within the same plane and wherein the operating means is an operating lever. Such a configuration is beneficial for the lateral space requirement of the filling apparatus. In particular during the filling process, paths between adjacent filling assemblies remain free of obstacles.

Further preferably, the filling tube is configured to be pivoted together with the moving device and, wherein the filling tube inlet end portion end portion comprises a tube connector pivotally arranged in a calotte-shaped adapter of the mounting unit for pivoting around the pivot axis.

Selectively, the moving device comprises a hinge joint. A hinge joint is a simple component which requires few parts and a small number of joints. This allows for easy maintenance and short down times during repairs.

Advantageously, the hinge joint is configured to move a first mounting plate relative to a second mounting plate, preferably, wherein the casing brake unit is coupled to the first mounting plate via a distance adjustment device, further preferably wherein the first mounting plate is coupled to the second mounting plate by one or more rods which are at least partially disposed within one or more sleeves.

In a more preferred embodiment of the invention, the position of the operating lever determines the position of the moving device, preferably wherein the lever is pivoted with regard to a center axis of the casing brake unit and the filling tube, when the filling assembly is in the casing reload position.

Further preferably, the casing brake unit comprises at least one support unit configured to at least partially circumferentially house at least a portion of the filling tube, preferably wherein the support unit comprises a lower and upper portion linked by a scissor like mechanism, further preferably wherein the support unit is disposed between the mounting unit and the casing brake unit. Thereby, stresses on the casing during the filling procedure are reduced.

The invention is further defined such that the moving device comprises an first bearing component, wherein the casing brake unit is coupled to a longitudinal member at a first end portion of the longitudinal member and wherein a second end portion of the longitudinal member is coupled to the first bearing component, preferably wherein the longitudinal member comprises means to adjust a distance between the casing brake unit and the filling tube outlet end portion. Thereby, the resistance of a casing to be filled can be adjusted. This allows for the application of the filling assembly to various casing diameters, casing and filling materials.

It is further preferred that the moving device comprises a guiding slot element including one or more guiding slots configured to guide a movement of the casing brake unit and the filling tube, preferably wherein the moving device comprises at least one first guiding slots configured to guide a movement of the casing brake unit and, wherein the guiding slot element comprises at least one second guiding slots configured to guide a movement of the filling tube, preferably wherein the at least one second guiding slots is at least partially V-shaped such that the at least one second guiding slots comprises a first section extending mainly in a direction parallel to the feeding direction, and a second section extending mainly in a direction opposite to the feeding direction.

Advantageously, the guiding slot element comprises a first leg portion, a second leg portion and connecting portion connecting the first and second leg portion, preferably wherein the first leg portion and the second leg portion extend at least approximately parallel to the lever and the filling tube movement plane, further preferably wherein the first leg portion comprises the at least one first guiding slots and the second leg portion comprises the at least one first guiding slots and the at least one second guiding slots. Thereby, all movement required to move the filling assembly from the filling position to the casing reload position are controlled by the guiding slot element. Guiding slots provide a simple and efficient implementation of guidance without complex gears. This further facilitates the cleaning of the filling assembly which is crucial in the food industry.

A system comprises a filling assembly, and a clipping machine.

Preferably, the clipping machine of the system comprises at least one displacing means configured to displace a paste-like, granular and/or liquid material filled into a substantially tubular or bag-shaped packaging casing, preferably wherein the at least one displacing means is configured to be arranged in a position configured to at least partially surround the casing brake unit (2000) and wherein, when in the casing reload position (RP), the casing break unit is at least partially circumferentially surrounded by the at least one displacing means. This configuration is beneficial since it requires even less lateral space around the system. Thus, more machines can be positioned within the same space and the space available can be used more economically.

The object is achieved by another embodiment of filling assembly for being mounted to a clipping machine for producing sausage-shaped products, like sausages according to the invention. The filling assembly comprises a filling tube with a filling tube axis for filling paste-like, granular and/or liquid material, in a filling process, in a feeding direction into a substantially tubular or bag-shaped packaging casing, wherein a packaging casing to be filled is configured to be arranged onto the filling tube and the filling tube is configured to be moved reversibly between a filling position and a casing reload position, a casing brake unit with a brake axis and a brake body for being detachably arranged on the filling tube in a filling position wherein the brake body is relatively fixable to the filling tube in the filling position and the casing brake unit is axially moveable along the brake axis in order to reversibly move between the filling position and the casing reload position, a mounting unit configured to mount the filling tube and the casing brake unit to the clipping machine, a moving device configured to move the filling tube and the casing brake unit relative to the clipping machine. When in the filling position, the filling tube and the casing brake unit are arranged coaxially, and, for attaining the casing reload position, the filling tube and the casing brake unit is configured to pivot from the clipping machine around a pivot axis and the brake unit is configured to carry out a linear movement along the filling axis.

The invention is further defined such that the movement of casing brake unit is restricted by the moving device. This provides the advantage that undesired movements of the casing brake unit are prevented, allowing for a well-defined filling process.

It is further preferred that the moving device comprises a hinge joint. A hinge joint is easy to operate, easy to maintain and provides the required restriction of the moving device.

Further preferred, the hinge joint comprises a control means. The invention is further defined such the position of the control means determines the position of the casing brake unit. Further preferred, the control means is an operating lever. This allows for an easy operation of the filling assembly by an operator.

In a further preferred embodiment the hinge joint is configured to move a first mounting plate relative to a second mounting plate. This implementation reduces the number of parts, whereby the production costs can be reduced.

The invention is further defined such the casing brake unit is coupled to the first mounting plate via a distance adjustment device. This allows for an adjustment of a distance between the casing brake unit and the filling tube outlet end portion in order allow for various casings to be used in conjunction with the filling assembly.

According to the invention, it is preferred that, the first mounting plate is coupled to the second mounting plate by one or more rods. Rods are an easy to clean element, which is a useful advantage for machines which have to meet the high hygienic standards of the food industry.

Further preferred, the one or more rods are at least partially disposed within one or more sleeves. This provides the advantage, that surfaces of the rods are only exposed to the environment when the filling machine is in the casing reload position. Thus contamination of the rods with filling material can be avoided, reducing the number of parts to be cleaned.

The invention is further defined such that the second mounting plate is coupled to the mounting unit. Preferably, the sleeves are coupled to the second mounting plate. Advantageously the sleeves are coupled to the mounting unit.

In a preferred embodiment of the invention, the filling tube is configured to be pivoted together with the casing brake unit and the moving device. This allows for a safe and ergonomic operation of the filling assembly during casing reload.

Preferably, the operating lever is configured to move at least partially along an arc. More preferably, the operating lever at least approximately extends parallel to the filling tube. The space required for the filling assembly can thereby be kept small.

Advantageously the operating lever and the filling tube move at last approximately within the same plane. Thereby, the vertical position of the filling tube and the operating lever can be adjusted such that an operator can operate the filling machine in an ergonomic fashion.

Further preferred the operating lever is configured to be operated manually by an operator of the clipping machine. This reduces control mechanisms applied to the filling assembly. The filling assembly can be operated without a power source which further simplifies the construction of the filling assembly.

According to the invention, it is preferred that, the filling tube comprises a filling tube inlet end portion and a filling tube outlet end portion. More preferably, the filling tube outlet end portion is configured to be disposed adjacent the casing brake unit, when in the filling position. Even more preferably, the filling tube inlet end portion comprises a tube connector pivotally arranged in a calotte-shaped adapter of the mounting unit for pivoting around the pivot axis. Thereby filling tubes of various diameters can be used in conjunction with the filling assembly.

Advantageously, the casing brake unit is coupled to the first mounting plate via a distance adjustment means.

Further preferred the mounting unit is configured to reversibly attach the filling assembly to a clipping machine. This allows for an easy replacement of the filling assembly and its application to various clipping machines.

The invention is further defined by a system comprising a filling assembly and a clipping machine.

According to the invention a method for reversibly moving a filling tube between a filling position and a reloading position is provided. In the filling position a casing brake unit is and a filling tube are coaxially aligned in a filling tube axis and in the casing reload position, the filling tube is pivoted with regard the filling tube axis and the casing brake unit is pivoted from the filling axis. The method further comprises pivoting the filling tube and the casing brake unit around a pivot axis such that the filling tube and the casing brake unit are provided in an intermediate position, pulling an operating lever provided on a moving device, moving the casing brake unit linearly in the feeding direction, pivoting the filling tube around a pivot axis such that the filling tube is provided in the exchange position.

Advantageously, the movement of the casing brake unit is restricted by the moving device.

Preferably, the movement of the casing brake unit is controlled by an at least partially angular movement of the operating lever.

In another embodiment a filling assembly for being mounted to a clipping machine for producing sausage-shaped products, like sausages, the filling assembly comprises a filling tube with a filling tube axis for filling paste-like, granular and/or liquid material, in a filling process, in a feeding direction into a substantially tubular or bag-shaped packaging casing, wherein a packaging casing to be filled is configured to be arranged onto the filling tube and the filling tube is configured to be moved reversibly between a filling position and a casing reload position. The filling assembly further comprises a casing brake unit with a brake axis and a brake body for being detachably arranged on the filling tube in a filling position wherein the brake body is relatively fixable to the filling tube in the filling position and the casing brake unit is axially moveable along the brake axis in order to reversibly move between the filling position and the casing reload position, a mounting unit configured to mount the filling tube and the casing brake unit to the clipping machine, and a moving device configured to move the filling tube and the casing brake unit relative to the clipping machine. When in the filling position, the filling tube and the casing brake unit are arranged coaxially; and, for attaining the casing reload position, the filling tube is configured to pivot from the casing brake unit and from the clipping machine around a pivot axis and the brake unit is configured to carry out a linear movement along the filling axis.

Preferably, the movement of casing brake unit is restricted by the moving device. More preferably, the movement of the filling tube is restricted by the moving device. Since the casing brake unit and the filling tube are restricted by single moving device, the number of parts of the filling assembly can be reduced, lowering production costs.

According to the invention, it is preferred that, the moving device comprises a control means. Preferably, the position of the control means determines the position of the filling tube and the casing brake unit. Even more preferably, the control means is an operating lever. This provides a hygienic advantage. An operator interacts only the lever of the filling assembly. Thereby, a contamination of the filling tube by an operator is prevented.

Selectively, the position of the operating lever determines the position of the moving device.

Preferably, the operating lever is configured to move at least partially along an arc.

In a preferred embodiment of the invention, the operating lever at least approximately extends parallel to the filling tube, when the filling assembly is in the filling position.

Advantageously, the lever is pivoted with regard to center axis of the casing brake unit and the filling tube, when the filling assembly is in the casing reload position.

According to the invention, it is preferred that, the operating lever and the filling tube move at last approximately within the same plane. This allows for an ergonomic design of the working zone of an operator of the filling assembly, since the height of the operating lever and the filling tube can adjusted to a suitable working height.

Even more preferably, the operating lever is configured to be operated manually by an operator of the clipping machine. Thereby, additional electronic, electric, pneumatic or hydraulic control system are not required. The filling assembly is thus easier to maintain and simpler to operate.

Advantageously, the casing brake unit comprises at least one support unit configured to at least partially circumferentially house at least a portion of the filling tube. Thereby, stresses on the casing during the filling procedure are reduced.

In a preferred embodiment, the support unit comprises a lower and upper portion linked by a scissor like mechanism. More preferably, the support unit is disposed between the mounting unit and the casing brake unit.

According to the invention, it is preferred that, the filling tube comprises a filling tube inlet end portion and a filling tube outlet end portion. More preferably, the filling tube outlet end portion is configured to be disposed adjacent the casing brake unit, when in the filling position. Even more preferably, the filling tube inlet end portion comprises a tube connector pivotally arranged in a calotte-shaped adapter of the mounting unit for pivoting around the pivot axis.

Advantageously, the moving device comprises a first bearing component, wherein the casing brake unit is coupled to a longitudinal member at a first end portion of the longitudinal member and wherein a second end portion of the longitudinal member is coupled to the first bearing component. More preferably, the longitudinal member comprises means to adjust a distance between the casing brake unit and the filling tube outlet end portion.

It is further preferred, that the moving device comprises one or more guiding slots configured to guide a movement of the casing brake unit and the filling tube.

Selectively, the moving device comprises at least one first guiding slots configured to guide a movement of the casing brake unit. Preferably, the moving device comprises at least one second guiding slots configured to guide a movement of the filling tube.

Advantageously, the at least one second guiding slots is at least partially V-shaped such that the at least one second guiding slots comprises a first section extending mainly in a direction parallel to the feeding direction, and a second section extending mainly in a direction opposite to the feeding direction.

Even more preferably, the at least one first guiding slots are at least partially hook-shaped such that at least one first guiding slots comprise a first section extending mainly in a direction perpendicular to the feeding direction, and a second section extending mainly in a direction parallel to the feeding direction.

Selectively, at least one first pins movable within the at least one first guiding slots couple the casing brake unit with the moving device. In a preferred embodiment, the at least one first pins are disposed in the first bearing component.

In a preferred embodiment, at least one second pins movable within the at least one second guiding slots couple the filling tube with the moving device.

Preferably, a guiding slot element comprises the at least one first guiding slots and the at least one second guiding slots. It is further preferred that the guiding slot element comprises a first leg portion, a second leg portion and bottom portion connecting the first and second leg portion.

It is further preferred, the first leg portion and the second leg portion extend at least approximately parallel to the lever and the filling tube movement plane.

Advantageously, the first leg portion comprises the at least one first guiding slots and the second leg portion comprises the at least one first guiding slots and the at least one second guiding slots.

More preferably, the pivot axis extends at least partially through an end portion of the first leg portion and through a middle portion of the second leg portion.

Selectively, the lever is coupled to the bottom portion of the guiding slot element.

In a more preferred embodiment the mounting unit comprises at least one attachment means configured to reversibly attach the filling assembly to a clipping machine.

Preferably, a system comprises a filling assembly according to the invention and a clipping machine.

In a preferred embodiment, the clipping machine comprises at least one displacing means configured to displace a paste-like, granular and/or liquid material filled into a substantially tubular or bag-shaped packaging casing. More preferably, the at least one displacing means is configured to be arranged in a position configured to at least partially surround the casing brake unit. Even more preferably, when in the casing reload position, the casing break unit is at least partially circumferentially surrounded by the at least one displacing means. More preferably, when in the casing reload position, the casing brake unit is configured to be at least partially replaced by an operator. A system having the aforementioned features requires less space. In particular, space required around the system in lateral direction can be reduced such that more machines can be fit within a given space.

The object is further achieved by a method for reversibly moving a filling tube between a filling position and a reloading position. In the filling position a casing brake unit and a filling tube are coaxially aligned in a filling tube axis. In the reloading position, the filling tube is pivoted with regard the filling tube axis and the casing brake unit remains coaxial to the filling axis. The method comprises pulling an operating lever provided on a moving device, moving the casing brake unit linearly in the feeding direction, and pivoting the filling tube around a pivot axis such that the filling tube is provided in the exchange position wherein the movement of the lever is an angular movement around a pivot axis.

Preferably, the movement of the casing brake unit is completed before the pivoting of the filling tube is initiated.

Selectively, the movement of the casing brake unit is restricted by the moving device.

According to the invention, it is preferred that, the movement of the filling tube is restricted by the moving device.

Advantageously, the movement of the casing brake unit and the pivoting of the filling tube is controlled by an at least partially angular movement of the operating lever.

Preferably, the operating lever is pivoted around a fixed pivot axis.

Selectively, a support unit is disposed between the casing brake unit and an inlet of the filling tube, and the support unit is opened by a scissor like mechanism.

It is preferred, that the support unit is opened during the linear movement of the casing brake unit.

According to the invention, it is preferred that, during movement of the casing brake unit, the casing brake unit is at least partially surrounded by displacing means of a clipping machine.

Preferably, the displacing means are arranged in an open configuration such that the casing brake unit can be moved at least partially into a volume at least partially surrounded by the displacing means.

### Figures

- Fig. 1a: is a schematic and perspective view from a first perspective of a filling assembly according to an embodiment of the invention in a filling position FP.
- Fig. 1b: is a bottom view of the filling assembly in a filling position FP.
- Fig. 1c: is a side view of the filling assembly in a filling position FP.
- Fig. 2: is a schematic and perspective view from a first perspective of a filling assembly according to another embodiment of the invention in an first intermediate position IP1.
- Fig. 3: is a schematic and perspective view from a first perspective of a filling assembly according to another embodiment of the invention in a second intermediate position IP2.
- Fig. 4: is a schematic and perspective view from a first perspective of a filling assembly according to another embodiment of the invention in a casing recharge position RP.
- Fig. 5: is a schematic and perspective view from a first perspective of a filling assembly according to another embodiment of the invention in a filling position FP.
- Fig. 6: is a schematic and perspective view from a second perspective of the filling assembly in a filling position FP.
- Fig. 7: is a bottom view of the filling assembly in a filling position FP.
- Fig. 8: is a schematic and perspective view from a first perspective of the filling assembly in an intermediate position IP.
- Fig. 9: is a schematic and perspective view from a second perspective of the filling assembly in an intermediate position IP.
- Fig. 10: is a bottom view of the filling assembly in an intermediate position IP.
- Fig. 11: is a schematic and perspective view from a first perspective of the filling assembly in a casing reload position RP.
- Fig. 12: is a bottom view of the filling assembly in a casing reload position RP.
- Fig. 13: is a schematic and perspective view from a first perspective of the filling assembly coupled to a clipping machine in a filling position FP.
- Fig. 14: is a schematic and perspective view from a first perspective of the filling assembly coupled to a clipping machine in a intermediate position IP.
- Fig. 15: is a schematic and perspective view from a first perspective of the filling assembly coupled to a clipping machine in a casing reload position RP.

### Description

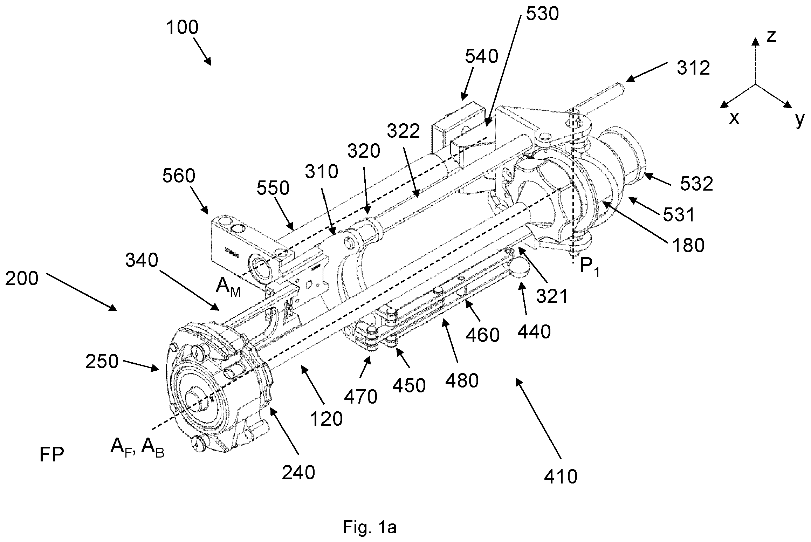

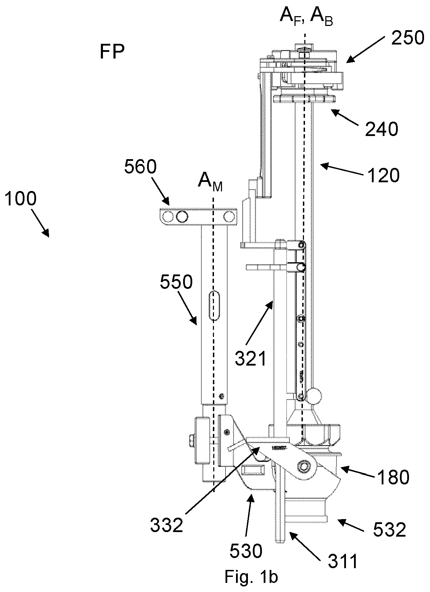

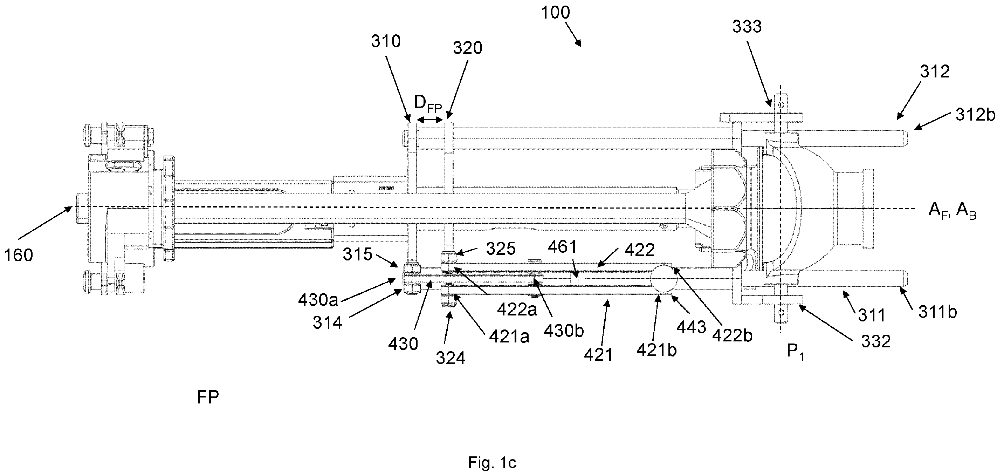

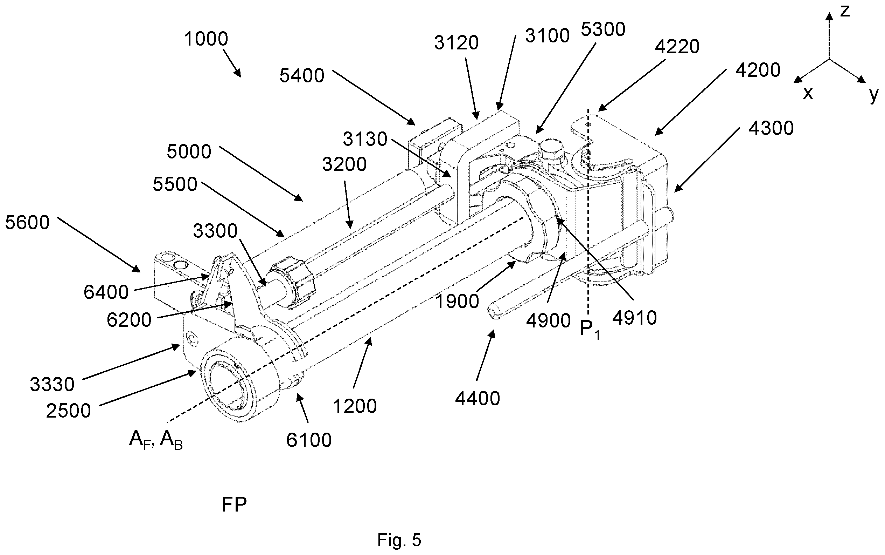

As used herein the terms *"upper"* and *"lower"* refer to a position, direction or portion of a device that is disposed or spaced from another position, direction or portion of a device in a vertical direction as indicated by the z-axis in Figs.1, 5. The terms *"before"* and "behind" as used herein refer to a position, direction or portion of a device that is disposed or spaced from another position, direction or portion of a device in a lateral direction as indicated by the y-axis in Fig.1, 5.

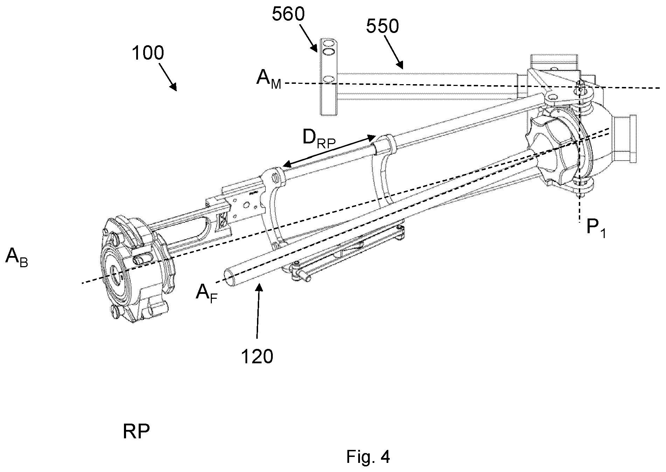

In Figs. 1 to 4, a filling assembly 100 for producing single sausage-shaped products or a chain of sausage-shaped products in conjunction with a clipping machine (not shown in Figs. 1 to 4) according to a first embodiment of the invention, like sausages is shown. Filling assembly 100 can be positioned in four positions: a filling position FP, a first intermediate position IP1, a second intermediate position IP2 and a casing reload position RP.

Figs. 1a-1c show filling assembly 100 in filling position FP. Filling assembly 100 comprises a filling tube 120 with a filling tube axis A_{F} defined as the central longitudinal axis of filling tube 120. Filling tube 120 further includes a filling tube outlet end portion 160 and a filling tube inlet end portion 140.

Assembly 100 further comprises a casing brake unit 200 and a mounting unit 500. Casing brake unit 200 comprises a brake body 240 and a brake frame 250. A brake axis A_{F} is defined by a central longitudinal axis of brake body 240 and/or brake frame 250. Casing brake unit 200 is axially moveable along brake axis A_{B} in order to reversibly move at least between a filling position FP and a casing reload position RP. In filling position FP as shown in Fig. 1, brake body 240 is positionable for encasing a part of filling tube 120 that is adjacent filling tube outlet end portion 160.

Filling assembly 100 is configured to be mounted to a clipping machine via mounting unit 500. Mounting unit 500 comprises a base unit 530. At a first end portion base unit 530 comprises a calotte shaped adapter 531. Filling tube inlet end portion 140 is connected to filling tube adapter 180 which is pivotally arranged in calotte-shaped adapter 531 for pivoting around pivot axis P₁. Filling tube 120 and filling tube connector 180 are separate parts that are mutually releasably fixed by a fixation nut 190. In an alternative embodiment according to the invention, filling tube connector 180 could be an integral part of filling tube 120. In order to prevent filling material leaking from filling assembly 100 during a filling process, the junctions between filling tube 120, filling tube connector 180 and/or calotte-shaped adaptor 531 are preferably provided with seals for clogging filling assembly 100. Calotte shaped adapter 531 comprises a connector 532 configured to be connected to a reservoir, providing filling assembly 100 with granular and/or liquid material, which is to be filled into tubular or bag-shaped packaging casing. Mounting unit 500 further comprises a rod 550 secured to a second end portion of base unit 530 by mounting plate 540. Rod 550 is configured to be coupled to a clipping machine. Rod 550 defines mounting axis A_{M}. A second end portion 551 of rod 550 is coupled to an adapter 560. Adapter 560 is configured to be secured to a clipping machine. When secured to a clipping machine filling assembly 100 does not require a second bearing means. In other embodiments a second bearing means can be provided at a lower portion of base unit 530 is order to stabilize base unit 530. The adapter can be configured to allow securing filling assembly 100 without applying any tools to a clipping machine. This can be achieved by providing two vertical rods at an outer coupling surface of a clipping machine, such the vertical rods can be inserted into corresponding holes of adapter 560 whereby filling assembly 100 is secured to a clipping machine. In other embodiments filling assembly 100 is secured to a clipping machine via one or more screw.

Filling assembly 100 comprises a moving device 300. Moving device 300 comprises first mounting plate 310 and second mounting plate 320. First and second mounting plates 310 and 320 are arc or c-shaped. First and second mounting plates 310 and 320 at least partially surround filling tube 120. First and second mounting plates 310 and 320 are disposed behind filling tube 120. A distance between the outer surface of tube 120 and a surface of first mounting plate 310 and second mounting plate 320 facing the outer surface of tube 120 is selected, such that an interaction between a casing disposed on filling tube 120 and first and second mounting plate 310, 320 is omitted.

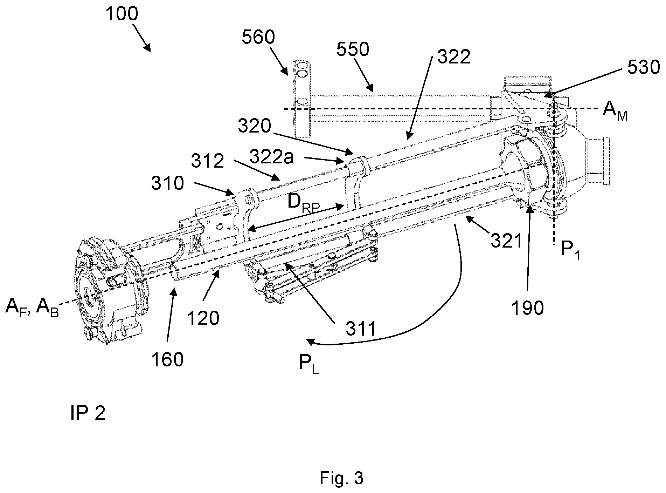

First mounting plate 310 is coupled to rods 311, 312 at respective end portions 311a, 312a of rods 311, 312. Rods 311, 312 are aligned coaxially with the filling tube axis, when filling assembly 10 is in filling position FP. Moving portion 300 further comprises sleeves 321, 322. Sleeves 321, 322 are aligned coaxially with the filling tube axis, when filling assembly 10 is in filling position FP. Sleeves 321, 322 are coupled to second mounting plate 320. As best shown in Fig. 3, end portions 321a, 322a of sleeves 321, 322 project from a surface of second mounting plate 320 towards first mounting plate 310. When in filling assembly 100 is in filling position FP end portions 321a, 322a contact a surface of first mounting plate 310 facing towards second mounting plate 320.

Second end portions 321b, 322b of rods 321, 322 are coupled to third mounting plate 331. Vertical mounting plate 331 extends perpendicular to filling tube axis A_{F} and parallel to first and second mounting plates 310, 320. Third mounting plate is disposed adjacent base unit 530 and behind filling tube axis A_{F}. A lower end portion of third mounting plate 330 is secured to a lower pivoting plate 332, disposed below base unit 530. An upper end portion of third mounting plate 330 is secured to an upper pivoting plate 333. The vertical distance between lower and upper pivoting plate 332, 333 is selected such that base unit 530 can be disposed between lower and upper pivoting plate. Lower and upper pivoting plate are pivotally arranged to base unit 530 via a lower and upper coupling 334, 335 to allow for pivoting of lower and upper pivoting plates 332 and 334 around pivot axis P₁.

Rods 311, 312 are disposed coaxially with sleeves 321, 322. Rods 311, 312 are disposed within sleeves 321, 322 respectively such that rods 311, 312 are transversally moveable with regard to sleeves 321, 322. In other words, rods 311, 312 move within sleeves 321, 322 in a telescopic fashion. Rods 311, 312 extend from a surface of first mounting plate 310 adjacent to second mounting plate 320, through second mounting plate 320, through sleeves 321, 322 and project out of the end portions of sleeves 321, 322 adjacent base unit 530 when filling assembly 100 is in filling position FP as shown in Fig. 1. In filling position FP first and second mounting plate 310, 320 are disposed adjacent to each other at a first distance D_{FP}.

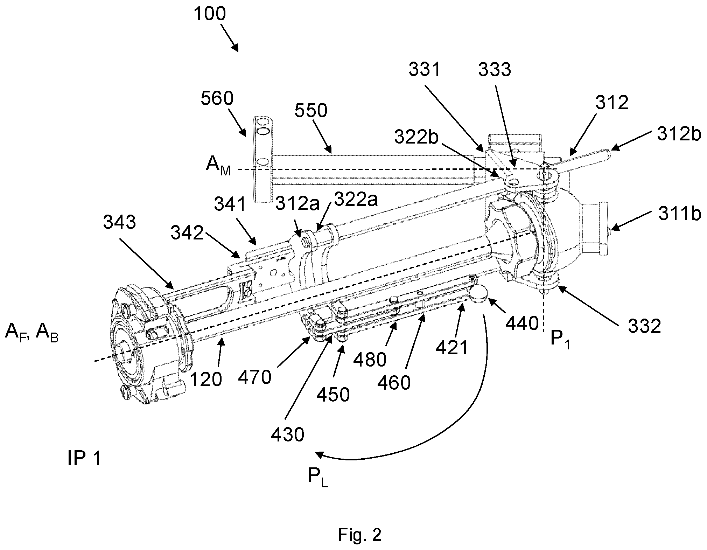

First mounting plate 310 is coupled to a distance adjustment device 340. Distance adjustment device 340 allows to set a distance between a plane defined in the casing break 240 and filling tube outlet end portion 160. Thereby, the resistance of the casing against stripping of the casing from filling tube 120 due to the flow of filling material can be adjusted. Distance adjustment means 340 comprises a first adapter plate 341. As best seen in Fig. 2, first adapter plate 341 is secured to first mounting plate 310 and extends in the feeding direction. An adjusting plate 342 is secured to first adapter plate 341. Adjusting plate 342 mainly extends in the feeding direction in a plane parallel to the filling tube axis A_{F} of filling tube 120 in the feeding position. In the embodiment shown in Fig. 2, adjusting plate 342 is coupled to first adapter plate 341 by one or more screws (not shown in the Figs.). By providing slots within first adapter plate 341 adjustment plate 342 can be secured at a selected distance from a surface of first mounting plate 310. Adapter plate 341 comprises an outer shape that is configured to interact with fastening means of the clipping machine. Adapter plate 341 can be releasably secured to the clipping machine. Thereby, a feedback can be provided to the clipping machine such that the clipping process is paused, if adapter plate 341 is not correctly coupled to the fastening means. Furthermore, this allows for prevention of undesired pivoting of filling assembly 100 during the filling process. The distance can be adjusted by tightening/untightening of the screws. Adjusting plate 332 is connected to second adapter plate 343. Second adapter plate 343 mainly extends in the feeding direction in a plane parallel to the filling tube axis A_{F} of filling tube 120 in the feeding position. Furthermore, second adapter plate 343 extends in a direction perpendicular to the filling tube axis A_{F} in order to align brake axis A_{B} with filling tube axis A_{F} when filling tube 120 is in filling position FP. An end portion of second adapter plate 343 is provided with means to couple brake frame 250 to second adapter 343.

Moving device 300 further comprises operating means as well as a joint portion 400 which couples first mounting plate 310 to second mounting plate 320. Joint portion 400 comprises a hinge joint 410. Hinge joint 410 is disposed below filling tube 120. Hinge joint 410 comprises an operating lever 420. Lever 420 is configured to be manually operated by an operator. Operating lever 420 includes a lower lever means 421 and an upper lever means 422. Each of lever means 421, 422 comprise a first end portion 421a, 422a and a second end portion 421b, 422b. First lever means 421, 422 are disposed parallel to each other and parallel to the filling tube axis, when the filling tube is in filling position FP. Lower lever means 421 is disposed below upper lever means 422. Upper lever means 422 is vertically spaced from lower lever means 421 by a vertical distance.

Lever means 421, 422 are moveably coupled to second mounting plate 320 at their first end portions 421a, 422b by coupling 450. Second mounting plate 320 comprises a lower end portion 323 which comprises a lower leg portion 324 and an upper leg portion 325. Lower leg portion 324 is vertically spaced from upper leg portion 325 by cut-out 326. Coupling 450 allows for a pivoting movement of first hinge means 421, 422 with respect to second mounting plate 320. Coupling 450 comprises an upper coupling portion 452 coupling upper lever means 422 to the upper leg portion 325 of second mounting portion 320 and a lower coupling portion 451 coupling the lower lever means 421 to lower leg portion 323 of second mounting portion 320.

As best shown in Fig. 1c, first end portion 422a of upper lever means 422 is disposed below upper leg portion 325 and above cut-out portion 326 of second mounting plate 320. First end portion 421a of lower lever means 421 is disposed above lower leg portion 324 and below cut-out 326 of second mounting plate 320.

Lever means 421, 422 are coupled to each other at their second end portion 421b, 422b by first connector 440. As shown in Figs. 1, 2, connector 400 is positioned adjacent filling tube inlet end portion 140 when filling assembly 100 is in filling position FP and in intermediate position IP1. First connector 440 comprises a sleeve 441 through which a coupling means (not shown) extends. Coupling means is coupled to second end portions 421b, 422b of lever means 421, 422. Sleeve 441 and coupling means are disposed between lower lever means 421 and upper lever means 422. First connector 440 further comprise a knob 443 which extends in a direction perpendicular to the filling axis, when filling assembly 100 is in filling position FP. Knob 443 is coupled to sleeve 441. Sleeve 441 can be configured to pivot with around a central axis defined by coupling means. Coupling means is secured to lower lever means 421 and upper lever means 422. Spacer disks can be provided between sleeve 441 and the corresponding surfaces of lower lever means 421 and upper lever means 422.

Lower lever means 421 and upper lever means 422 are coupled to each other at a second position by second connector 460. Second connector 460 is disposed between second end portions 421a, 422b of lever means 421, 422 and connector 440. Second connector 460 comprises a second sleeve 461, disposed between lower lever means 461 and upper lever means 462, through which a second coupling means (not shown) extends. Second coupling means is coupled to lower lever means 421 and to upper lever means 422. Second coupling means is secured to lower lever means 421 and upper lever means 422.

Hinge joint 410 comprises a hinge means 430. Hinge means 430 comprises a first end portion 430a and a second end portion 430b. First end portion 430a of hinge means 430 is coupled to first mounting plate 310 at coupling 470. First mounting plate 310 comprises a lower end portion 313 which comprises a lower leg portion 314 and an upper leg portion 315. Lower leg portion 314 is vertically spaced from upper leg portion 315 by cut-out 316. First end portion 460a of hinge means 430 is disposed in cut-out 316 between lower leg portion 314 and upper leg portion 315. Coupling 470 allows for a pivoting movement of hinge means 430 with respect to first mounting plate 310. Coupling 470 comprises coupling means (not shown) which extend through holes in first lower leg portion 314, first end portion 430a of hinge means 430 and first upper leg portion 315 of first mounting plate 310. Spacer disks are provided between the neighboring surfaces of lower leg portion 314 and hinge means 430 as well as hinge means 430 and upper leg portion 315.

Hinge means 430 is disposed parallel to the filling tube axis A_{F}, when filling tube 120 is in filling position FP. Hinge means 430 is at least partially located between lower lever means 421 and upper lever means 422 within the space defined between lower lever means 421 and upper lever means 422. In filling position FP hinge means 430 extends at least partially through cut out 326 of first mounting plate 320.

Second end portion 430b of hinge means 430 is coupled to lower lever means 421 and upper lever means 422 via coupling 480. Coupling 480 is disposed between coupling 450 and second spacer 427, when filling assembly 100 is in the filling position FP. Coupling 480 comprises coupling means 481 which extends through lower lever means 421, hinge means 430 and upper lever means 422. Spacer disks are provided between the neighboring surfaces of lower lever means 421, hinge means 430 and upper lever means 422. Coupling 480 is configured to allow a pivoting movement of hinge means 430 with respect to lower and upper lever means 421, 422.

### Movement from filling position FP to casing reload position RP

Filling position FP of filling assembly 100 is shown in Fig 1. When in the filling position FP filling tube 120 is arranged coaxially with casing brake unit 200. In particular filling tube axis A_{F} is coaxial with brake axis A_{B} defined by brake body 240 and brake frame 250. A tubular or bag-shaped packaging casing provided e.g. in an accordion shape or a gathered configuration, is disposed around filling tube 120. A reservoir of granular and/or liquid material to be filled into tubular or bag-shaped packaging casing is coupled to connector 532. The material is fed through an inner lumen 150 defined by filling tube 120. The material is transported in a feeding direction defined by a flow of material flowing from filling tube inlet end portion 140 to filling tube outlet end portion 160. At filling tube outlet end portion 160 the material interacts with the casing forcing the material to be stripped from filling tube 120. By adjustment of a distance between brake body 240 of filling tube outlet end portion 160 the resistance of the casing against a movement into the feeding direction induced by the inflow of material can be adjusted.

Casing brake unit 200 is axially secured with regard to filling tube outlet end portion 160 by joint portion 400. Filling tube axis A_{F} and brake Axis A_{B} are coaxial with an axis of a clipping machine defined by displacement means of the clipping machine. Filling tube axis A_{F} and brake axis A_{B} are parallel to a mounting axis A_{M} defined by rod 550 of mounting unit 500.

Once all casing is used up or consumed, filling assembly 100 is moved from the filling position FP to the casing reload position RP in order to allow an operator to dispose new casing around filling tube 120. In order to move filling assembly 100 from filling position FP to casing reload position RP, an operator decouples adapter 341 from fastening means of the clipping machine. Thereby, the transition from filling position FP to casing reload position RP is initiated. As soon as adapter 341 is loosened from fastening means filling tube 120 is pivoted around pivot axis P₁ to move from filling position FP to intermediate position IP1 as shown in Fig. 2.

Intermediate position IP1 should not be considered a position in which filling assembly 100 remains for a longer period. Intermediate position IP1 is characterized by a pivoted position. In intermediate position IP1, mounting unit 500 remains stationary with regard to the clipping machine, while other parts of filling assembly 100 are pivoted. As indicated in Fig. 2, break axis A_{B} and filling tube axis A_{F} are pivoted with regard to mounting axis A_{M}. In intermediate position IP casing brake unit 200 is coaxially arranged with regard to filling tube axis A_{F}. Brake unit 200 is disposed adjacent filling tube outlet end portion 160 as in filling position FP. Due to the corresponding couplings parts of brake unit 200, moving device 300 and hinge portion 400 are also pivoted and remain aligned with brake axis A_{B} and filling tube axis A_{F} in a configuration similar to the filling position FB. Connector 440 is located adjacent filling tube inlet end portion 140 when filling assembly 100 is in intermediate positon IP1.

In order to further transition to the casing reload position RP hinge joint 410 is engaged by an operator. This is achieved by pulling knob 443. By pulling knob 443, lever means 421, 422 and hinge means 430 are pivoted. Hinge means 421, 422 pivot around an axis defined by coupling 450. Since hinge means 430 is coupled to lever means 421, 422 by coupling 480 hinge means 430 is also pivoted.

Pivoting of lever means 421, 422 and hinge means 430 causes a translational movement of first mounting plate 310 with regard to second mounting plate 320. Second mounting plate 320 remains in its position relative to base unit 530 while first mounting plate 310 moves translationally away from base unit 530. Rods 311, 312 are moved along axis parallel to brake axis A_{B} and filling tube axis A_{F} and coaxial to sleeves 321, 322. The distance between opposite surfaces of first mounting plate 310 and second mounting plate 320 is increased from D_{FP} to D_{RP}. Brake unit 200 is axially moved along brake axis A_{B} and filling tube axis A_{F}. The distance between brake unit 200 and filling tube outlet end portion 160 is increased such that filling tube outlet end portion 160 is exposed. As best shown in Fig. 3, brake unit 200 does not surround filling tube outlet end portion 160 in intermediate position IP2. In intermediate position IP2 connector 440 is positioned adjacent to filling tube outlet end portion 160.

For transitioning from intermediate position IP2 to casing reload position RP filling tube 120 is pivoted around axis P₁. Thereby, filling tube axis A_{F} is pivoted with regard to brake axis A_{B} and mounting axis A_{M}. Filling tube axis A_{F} and brake axis A_{B} are not coaxial. Filling tube outlet end portion 160 is further exposed. Thereby, access to filling tube outlet end portion 160 is enhanced. In casing reload position RP, a new casing can be disposed on filling tube 120 by an operator. If required, nut 190 can be loosened in order to replace filling tube 120.

In casing reload position RP, access to brake unit 200 is enhanced allowing for a replacement of brake body 240 or other parts of brake unit 200 since, brake body 240 is usually made of comparatively soft material, like rubber, and is subject to permanent friction with the packaging casing. Therefore, brake body 240 generally suffer stronger wear-out than other components of the clipping machine, i.e. filling tube 120, displacer unit or clipping unit. If worn-out, brake body 240 can lead to machine failure, i.e. by damaging the packaging casing or providing not enough friction to the packaging casing which will lead to an increased amount of packaging casing being pulled-off the filling tube per product produced. As a result, the clipping machine can be damaged, production has to be stopped and/or the product is faulty.

### Movement from casing reload position RP to filling position FP

In order to restart the filling process filling assembly 100 is moved from casing reload position RP to intermediate position IP2. Transition from casing reload position RP to intermediate positon IP2 is achieved by pivoting filling tube 120 around pivot axis P₁ in a direction towards brake axis A_{B} and mounting axis A_{M}. Thereby, filling tube axis A_{F} and brake axis A_{B} are aligned.

In a next step, an operator pulls know 443. In an arc like movement connector 440 is moved from a position adjacent to filling tube outlet end portion 160 in intermediate position IP2 to a position adjacent to filling tube inlet end portion 140 in intermediate position 140. The movement of connector 440 triggers a translational movement of first mounting plate 310 relative to second mounting plate 320. The distance between first mounting plate 310 and second mounting plate 320 is decreased from D_{RP} to D_{FP}. Rods 311, 312 are guided by and move axially within sleeves 321, 322. Brake unit 200 is moved against the feeding direction and relative to filling tube outlet end portion 160. Brake unit 200 is moved to a position partially surrounding filling tube outlet end portion 160. As soon as connector 440 has reached its final position adjacent filling tube inlet end portion 140 the axial position of brake unit 200 with regard to filling tube outlet end portion 160 is secured by joint portion 400.

In a final step, filling tube 120 is pivoted around pivot axis P₁ together with brake unit 200, moving device 300 and joint portion 400. The pivoting motion is continued until adapter 341 is engaged by a fastening means of a clipping machine. Filling position FP is reached and the filling process can be continued.

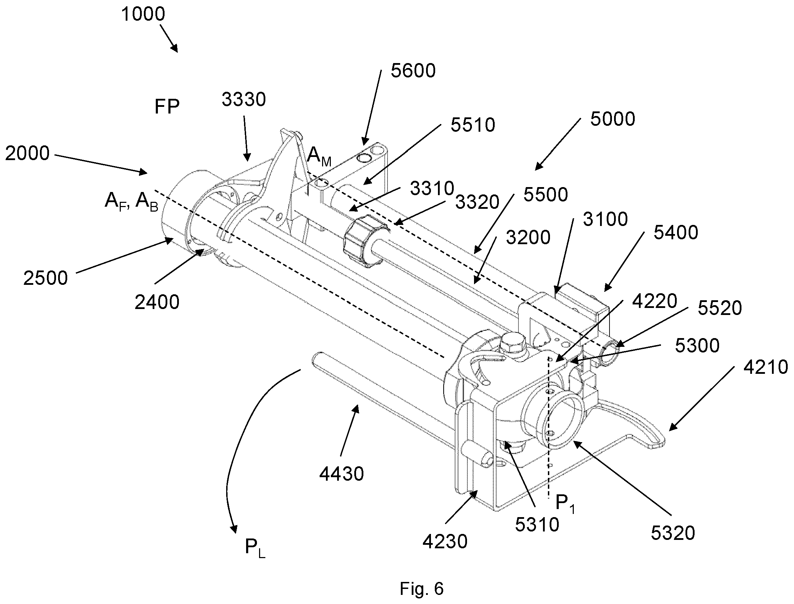

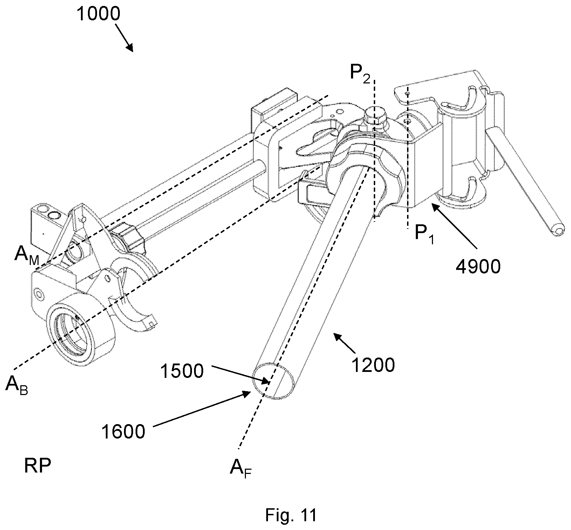

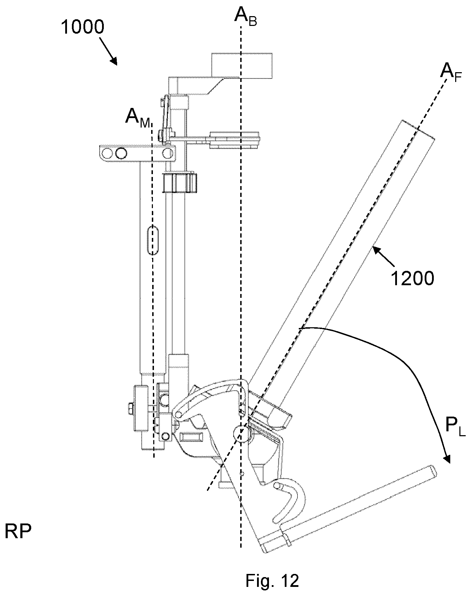

In Figs. 5 to 12, a filling assembly 1000 according to a second embodiment of the invention for producing sausage-shaped products, like sausages is shown. Filling assembly 1000 can be positioned in three positions: a filling position FP, an intermediate position IP and a casing reload position RP.

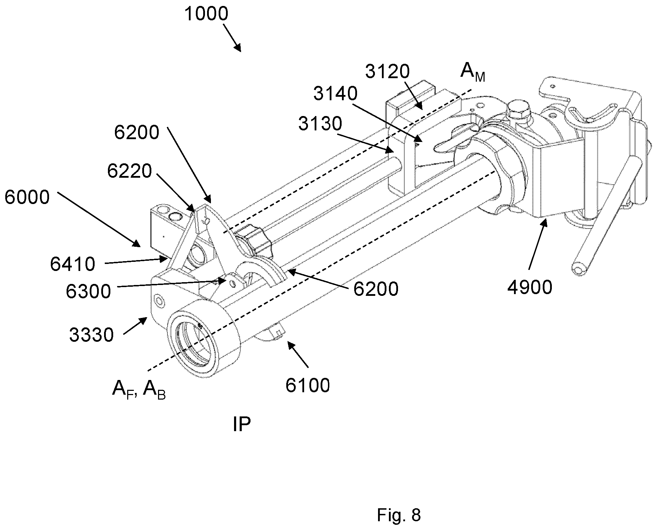

In Figs. 5, 6, and 7 filling assembly 1000 configured to be mounted to a not shown clipping machine for producing sausage-shaped products, like sausages is shown in filling position FP. Filling assembly 1000 comprises a filling tube 1200 with a filling tube axis A_{F} which corresponds to the central longitudinal axis of filling tube 1200. Filling tube 1200 further includes a filling tube outlet end portion 1600 (best seen in Fig. 8) and a filling tube inlet end portion 1400. Assembly 1000 further comprises a casing brake unit 2000 and a mounting unit 5000. The casing brake unit 2000 comprises a brake body 2400 and a brake frame 2500. A brake axis A_{F} is defined by a central longitudinal axis of brake body 2400 and/or brake frame 2500. Casing brake unit 2000 is axially moveable along brake axis A_{F} in order to reversibly move between a filling position FP and a casing reload position RP. In filling position FP as shown in Figs. 1 to 3 brake body 2400 is arrangable for encasing a part of filling tube 1200 that is adjacent filling tube outlet end portion 1600.

Filling assembly 1000 is configured to be mounted to a clipping machine via mounting unit 5000. Mounting unit 5000 comprises a base unit 5300. At a first end portion base unit 5300 comprises a calotte shaped adapter 5310. Filling tube inlet end portion 1400 is connected to filling tube adapter 1800 which is pivotally arranged in calotte-shaped adapter 5310 for pivoting around pivot axis P₁. Filling tube 1200 and filling tube connector 1800 are separate parts that are mutually releasably fixed by a fixation nut 1900. In an alternative embodiment according to the invention, filling tube connector 1800 could be an integral part of filling tube 1200. In order to prevent filling material leaking from filling assembly 1000 during a filling process, the junctions between filling tube 1200, filling tube connector 1800 and/or calotte-shaped adaptor 5310 are preferably provided with seals for clogging filling assembly 1000. Calotte shaped adapter 5310 comprises a connector 5320 configured to be connected to a reservoir, providing filling assembly 1000 with granular and/or liquid material, which is to be filled into tubular or bag-shaped packaging casing. Mounting unit 5000 further comprises a rod 5500. A first end portion 5520 of rod 5500 is secured to a second end portion of base unit 5300 by mounting plate 5400. A second end portion 5510 of rod 5500 is coupled to an adapter 5600. Adapter 5600 is configured to be secured to a clipping machine. When secured to a clipping machine filling assembly 1000 does not require a second bearing means. In other embodiments a second bearing means can be provided at a lower portion of base unit 5300 is order to stabilize base unit 5300.

Casing brake unit 2000 is coupled to moving device 3000. Moving device 3000 comprises first bearing component 3100. First bearing component 3100 is U-shaped, comprising a lower leg portion 3110 and an upper leg portion 3120. Lower leg portion 3110 and upper leg portion 3120 are connected by connecting portion 3130 of bearing component 3100. Between lower leg portion 3110 and upper leg portion 3120 a cut-out 3140 is defined. The distance between lower leg portion 3110 and upper leg portion 3120, i.e. the vertical length of cut-out 3140 is sufficient such that a corresponding portion of base unit 5300 can be partially disposed within cut-out 3140. Surfaces of lower leg portion 3110 and upper leg portion 3120 opposing the corresponding surfaces of base unit 5300 comprising guiding slots, which allow for a transversal movement of first bearing component 3100 along filling tube axis A_{F} of filling tube 1200 when in the filling position FP. Base unit 5300 is provided with guiding pins on its respective surfaces neighboring the corresponding surfaces of lower and upper leg portions 3110, 3120 of first bearing unit 3100 and are configured to engage the corresponding guiding slots.

Connecting portion 3130 of first bearing component 3100 is connected to a first end portion of longitudinal member 3200 which extends parallel to filling tube axis A_{F} of filling tube 1200, when filling assembly 1000 is in the filling position FP. Second end portion of elongated member 3200 is coupled to a distance adjusting unit 3300. Distance adjusting unit 3300 comprises a cylinder 3310 in which an end portion of elongated member 3200 is disposed. Distance adjusting unit 3300 further comprises securing nut 3320, which allows to secure elongated member 3200 within an opening of cylinder 3310 facing towards first bearing component 3100. Securing nut 3320 is configured to be engage by an operator of filling apparatus 1000 in order to adjust a distance between filling tube outlet end portion 1600 and casing brake unit 2000. Thereby the resistance provided by casing brake 2400 against the force acting on the casing during the filling process can be adjusted. Brake holder 2500 is coupled to cylinder 3310 by an adapter 3330.

Moving device 3000 further comprises a guiding slot element 4200. Guiding slot element 4200 is coupled to mounting unit 5000 at base unit 5300 at pivot axis P₁. Guiding slot element 4200 is moveable with regard to base unit 5300. In particular, guiding slot element 4200 can be pivoted around pivot axis P₁. Guiding slot element 4200 comprises lower leg portion 4210, upper leg portion 4220 and connecting portion 4230. Lower leg portion 4210 is disposed below base unit 5300. Upper leg portion 4220 is arranged above base unit 5300. Connecting portion 4230 includes an operating means to move moving device 3000. In the embodiment of Figs. 5 to 12, operating means comprises a lever 4430 configured to be manually operated by an operator in order to move filling assembly 1000 between filling position FP and casing reload position RP. In filling position FP, lever 4430 extends mainly parallel to filling tube axis A_{F} of filling tube 1200.

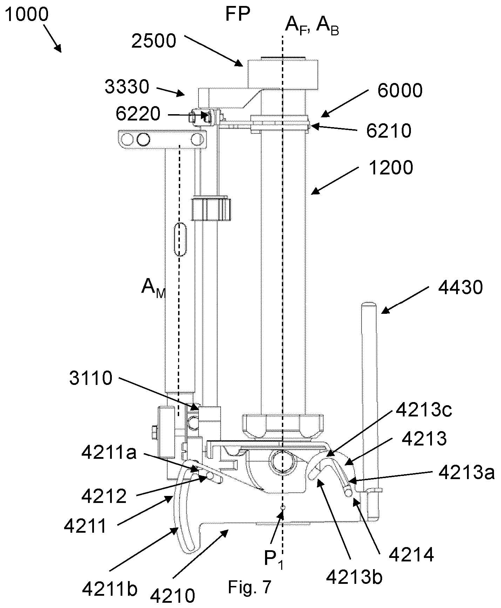

Lower or second leg portion 4210 comprises a first guiding slot 4211. As best shown in Fig. 7, first guiding slot 4211 is disposed on a side of lower leg portion 4210 opposite to lever 4430. First guiding slot 4211 is hook shaped and comprises a first section 4211a and a second section 4211b. First section 4211a is connected to second section 4211b by an intersection point 4211c. Pin 4212 is moveably disposed in guiding slot 4211 and couples guiding slot 4211 to first bearing component 5300. As shown in Fig. 7, first section 4211a of first guiding slot 4211 is generally straight and angled with regard to filling tube axis A_{F}. Second section 4211b of first guiding slot 4211 has an at least approximately arc shape. First section 4211a is shorter in length than second section 4211b. First guiding slot 4211 has a substantially constant width which allows for a movement of pin 4212 along first guiding slot 4211.

Lower or second leg portion 4210 and upper or first leg portion 4220 each comprise second guiding slot 4213. Second guiding slots 4213 are disposed on the same side of lower and upper leg portion 4210, 4220 as lever 4430 with regard to pivot axis P₁. Second guiding slot 4213 comprise a first section 4213a and a second section 4213b. First section 4213a and second section 4213b are connected by an intersection point 4213c. As best shown in Fig. 7, second guiding slot 4213 resembles a V-shape. First section 4213a is approximately straight and angled with regard to filling tube axis A_{F} of filling tube 1200 in filling position FB. First section 4213a is longer than second section 4213b. Pin 4214 is moveably disposed within second guiding slot 4213 and is coupled to filling tube guidance 4900. Filling tube guidance 4900 is arranged between lower leg portion 4210 and upper leg portion 4220 of guiding slot element 4200. Filling tube guidance 4900 comprises a central aperture 4910 configured to be coupled to calotte shaped adapter 5310.

Optionally filling assembly 1000 can comprise support unit 6000 disposed adjacent brake holder 2500. Support unit 6000 comprise a lower portion 6100 and an upper portion 6200. Lower and upper portion 6100, 6200 comprise an at least approximately arc shaped engagement portion 6110, 6210 which partially surrounds filling tube 1200 at a position between filling tube outlet end portion 1600 and filling tube inlet end portion 1400. Support unit 6000 is configured to provide additional support and guidance to the casing disposed on filling tube 1200. The engagement portion can be provided with a polymer material in order to reduce friction and prevent damages of the casing / casing material. Lower and upper portion 6100, 6200 are coupled by a central axis 6300 as best shown in Fig. 8. Axis 6300 allows a pivot movement of lower and upper portion 6100, 6200 around central axis 6300 while a relative axial movement of lower and upper portion 6100, 6200 with respect to each other is prevented. Rear end portions 6120, 6220 comprise a perpendicular portion coupled to adapter 3330 by actuation means 6410 for coupling adapter 3330 to rear end portion 6120 of upper portion 6100 and actuation means 6420 for coupling adapter 3330 to rear end portion 6220 of lower portion 6200. Actuation means 6410, 6420 are coupled to adapter 3330 and rear end portions 6210, 6220 such that actuation means 6410, 6420 can pivot around the correspond point of attachment.

### Description of movement from filling position FP to casing reload position RP

When in the filling position FP, filling tube 1200 is arranged coaxially with casing brake unit 2000. In particular filling tube axis A_{F} is coaxial with brake axis A_{B} defined by brake body 2400, a brake frame 2500. The tubular or bag-shaped packaging casing is disposed around filling tube 1200. A reservoir of granular and/or liquid material to be filled into tubular or bag-shaped packaging casing is coupled to connector 5320. The material is fed through an inner lumen 1500 defined by filling tube 1200. The material is transported in a feeding direction defined by a flow of material flowing from filling tube inlet end portion 1400 to filling tube outlet end portion 1600. At filling tube outlet end portion 1600 the material interacts with the casing forcing the material to be stripped from filling tube 1200. By adjustment of a distance between brake body 2400 of filling tube outlet end portion 1600 the resistance of the casing against a movement into the feeding direction induced by the inflow of material can be adjusted. Once all casing is used, filling assembly 1000 has to be moved from filling position FP to casing reload position RP in order to allow an operator to dispose new casing around filling tube 1200.

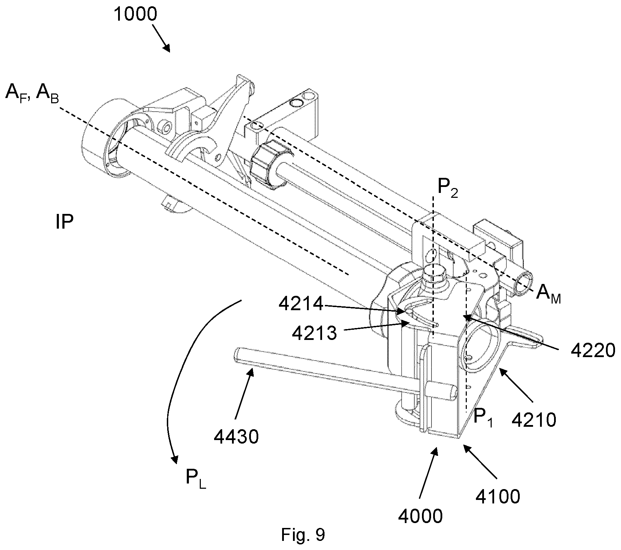

In order to move filling assembly 1000 from filling position FP to casing reload position RP, an operator pulls lever 4430 in an arc like movement outwards along an path indicated by arrow P_{L} in Fig. 9. Thereby, the transition from filling position FP to casing reload position RP is initiated. As soon as lever 4430 is pulled guiding slot element 4200 is pivoted around axis P₁. As best shown in Figs. 5 to 7, pivot guiding slot element 4200 causes a transversal movement of casing brake unit 2000. This is achieved by engagement of pin 4212 with first guiding slot 4211. When in filling position FP, an axial movement of pin 4212 is restricted by guiding slot 4211. As soon as lever 4430 is operated, first section 4211a of first guiding slot 4211 moves pin 4212 in a transversal direction parallel to filling tube axis A_{F} and brake axis A_{B}. The movement of pin 4212 causes a transversal movement of first bearing component 3100, elongated member 3200, distance adjusting unit 3300 and brake adapter 3330. Thereby, casing brake unit 2000 is moved in the feeding direction in a transversal way along filling tube axis A_{F} and brake axis A_{B}.

Upper and lower portion 6200, 6100 of optional support unit 6000 pivot around axis 6300. Thereby, an arc shaped engagement portions 6110, 6210 are moved away from an outer surface of filling tube 1200. The opening defined between lower and upper portion 6100, 6200 is increased.

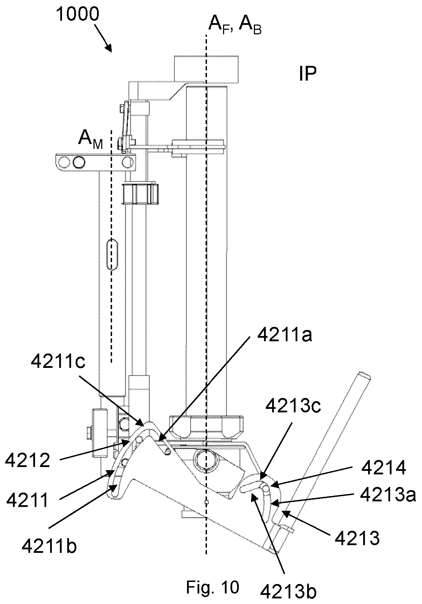

Movement of lever 4430 is continued until an intermediate position IP as shown in Figs. 8 to 10 is reached. Intermediate position IP is used only in conjunction to elaborate the movement of corresponding parts of filling assembly 1000 and should not be considered a position in which filling assembly 1000 remains for a longer period. Intermediate position IP is characterized by a position of brake unit 2000 and optional support unit 6000. In intermediate position IP, brake unit 2000 has moved sufficiently far away from filling tube inlet end portion 1600 such that filling tube outlet end portion 1600 is not surrounded by brake 2400. Furthermore, optional support 6000 is opened sufficiently such that the smallest distance between engagement portion 6110 of lower portion 6100 and engagement portion 6210 of upper portion 6200 is slightly larger than an outer diameter of filling tube 1200. In other words, filling tube 1200 is not surrounded by parts of casing brake unit 2000 or support unit 6000. As shown in Fig. 10, pin 4212 coupling the movement of first bearing component 3100 to the movement of guiding slot element 4200 is located in second section 4211b of first guiding slot 4211. Due to the shape of second section 4211b, further pivoting of guiding slot element 4200 does not affect the position of pin 4211. The position of first bearing component 3100 remains stationary during further pivoting of guiding slot element 4200. Pin 4214, which couples filling tube guidance 4900 to the movement of guiding slot element 4200 is positioned in first section 4213a of second guiding slot 4213, close to intersection point 4213c, which marks the transition to second section 4213b. Due to the shape of first section 4213a, pin 4214 and thus filling tube guidance 4900 is not affected by pivoting guiding slot element 4200 from filling position FP to intermediate position IP.

During the movement from intermediate position IP to casing reload position RP, pin 4214 is engaged by second section 4213b of second guiding slot 4213. Thereby a pivoting movement of filling tube 1200 is achieved. Filling tube 1200 pivots around axis P₁, while casing brake unit 2000 remains in brake axis AP and in its state reached at intermediate position IP, since the shape of second section 4211b of second guiding slot 4211 corresponds to a circle which extends axis P₁ to second section 4211b of second guiding slot 4211. In other words, the position of casing brake unit 2000 and optional support unit 6000 remains unaffected by the movement of guiding slot element 4200 between intermediate position IP and casing reload position RP. Casing reload position allows an operator to e.g. dispose casing on filling tube 1200. In addition brake unit 2000 is accessible for exchanging brake body 2400. Movement of filling tube 1200 is achieved without a direct manual interaction of an operator with filling tube 1200. Filling assembly 1000 further provides a hygienic advantage, since a contamination of an operator by filling tube 1200 or vice versa can be prevented, since an interaction of an operator with filling assembly 1000 is limited to lever 4430.

### Description of return from casing reload position RP to filling position FP

As soon as e.g. a new casing is provided on filling tube 1200, filling assembly 1000 can be transitioned from casing reload position RP to intermediate position RP. Lever 4430 is pushed inwards in direction of mounting unit 5000; in opposite direction to the movement of lever 4430 for moving filling assembly 1000 from intermediate position IP to casing recharge position RP. By pivoting lever 4430 around pivot axis P₁, guiding slot element 4200 is pivoted around pivot axis P₁. Second sections 4213b of second guiding slots 4213 on the lower and upper leg 4210, 4220 of guiding slot element 4200 engage pins 4214 disposed on the lower and upper portion of filling tube guidance 4900. Filling tube 1200 is pivoted around pivot axis P2. Second section 4211b of first guiding slot 4211 engage with pin 4212. First bearing component 3100 remains stationary.

Pivoting of filling tube 1200 is terminated as soon as intermediate position IP is reached. Pins 4214 disposed on the lower and upper portion of filling tube guidance 4900 reach intersection points 4213c provided in second guiding slots 4213 on lower and upper leg portion 4210, 4220 of guiding slot element 4200. As soon as pins 4213 transition to first section 4213a of second guiding slots 4213 further pivoting of lever 4430 does not affect the position of filling tube 1200. Filling tube axis A_{F} is aligned with brake axis A_{B}. Filling tube axis A_{F} is parallel to mounting axis A_{M}. As soon as pin 4212 passes intersection point 4211c of first guiding slot 4211 in lower leg 4210 of guiding slot element 4200, a movement of first bearing component 3100 is initiated. First bearing component 3100 is forced to carry out a translational movement coaxially to filling tube axis A_{F}, brake axis A_{B} and mounting axis A_{M}. Casing brake unit 2000 is moved translationally along brake axis A_{B} and filling tube axis A_{F} against the feeding direction towards the filling tube outlet end portion 1600.

Upper and lower portion 6200, 6100 of optional support unit 6000 pivot around axis 6300. Thereby, arc shaped engagement portions 6110, 6210 are moved towards an outer surface of filling tube 1200. The opening defined between lower and upper portion 6100, 6200 is decreased.

The movement is completed as soon as pins 4212 and 4214 reach their corresponding end position in the first sections 4211a, 4213a of first and second guiding slots 4211, 4213. Lever 4430 is positioned substantially parallel to filling tube axis A_{F}, brake axis A_{B} and mounting axis A_{M}. Filling position FP is reached and the filling process can be continued.

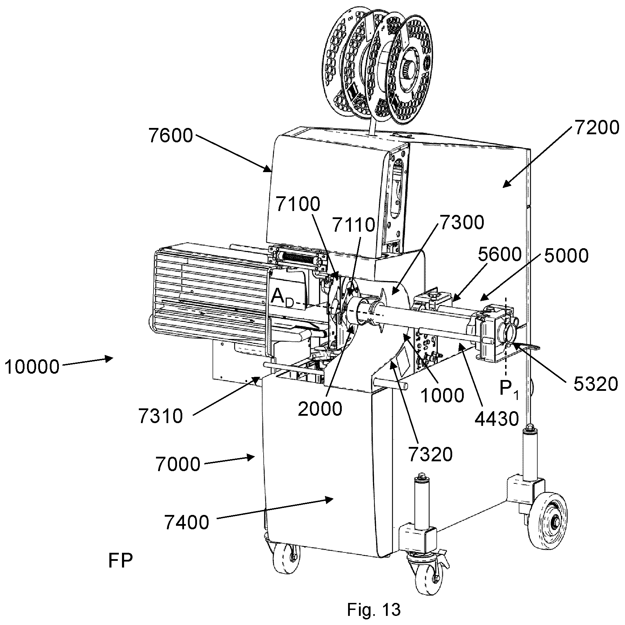

Figs. 13 to 15 show a system 10000 comprising filling assembly 1000 and a clipping machine 7000. Filling assembly 1000 is reversibly coupled to clipping machine 7000 by adapter 5600. Clipping machine 7000 shown in Figs. 13 to 15 should not be considered as limiting with regard to the kind of clipping machine to which filling assembly 1000 can be coupled. Adapter 5600 of mounting unit 5000 of filling assembly 1000 allows to couple filling assembly 1000 to arbitrary clipping machines which comprise an interface allowing for coupling with filling assembly 1000. Clipping machine 7000 should be considered an example for a clipping machine coupleable to filling assembly 1000. Similarly filling assembly 100 can be coupled to clipping machine 7000 in another embodiment of a system comprising a clipping machine 7000 and a filling assembly 100.

In the filling position FP as shown in Fig. 13, connector 5320 is connected to a reservoir (not shown), providing the filling assembly 1000 with granular and/or liquid material, which is to be filled into tubular or bag-shaped packaging casing to create, for example, a sausage-shaped product or a chain of sausage-shaped products. The filling is fed into filling tube 1200 and moves from filling tube inlet end portion 1400 to filling tube outlet end portion 1600. In filling position FP, filling tube outlet end portion 1600 is disposed adjacent casing brake unit 2000 such that casing brake unit 2000 at least partially surrounds filling tube outlet end portion 1600.

In Figs. 13 to 15, filling assembly 1000 is coupled to a first side portion 7200 of clipping machine 7000. Reversible coupling is achieved by coupling adapter 5600 of mounting unit 5000 to a corresponding interface (not shown) of clipping machine 7000. Clipping machine 7000 comprises an at least approximately U-shaped cut out or indentation 7300 at a front side portion 7400 of clipping machine 7000. Cut-out 7300 extends from an end portion 7320 at first side portion 7200 adjacent adapter 5600 to an end portion 7310 adjacent a second side portion 7600 of clipping machine 7000. Cut-out 7300 defines an open volume within clipping machine 7000 facing towards front side portion 7400. Filling assembly 1000 at least partially extends into cut-out 7400. In particular, filling tube 1200, optional support device 6000 and casing brake unit 2000 as well as parts of moving device 3000 are disposed at least partially within cut-out 7300. Cut-out 7300 is sufficiently large to accommodate the corresponding portions of filling assembly 1000. In particular, cut-out 7300 offers sufficient space to accommodate the corresponding parts of filling assembly 1000 in filling position FP, intermediate position IP and casing reload position RP.

Inside clipping machine 7000 are provided, *inter alia*, a plurality of displacement means 7100 for creating an at least approximately content- or filling-free plait-like portion to form or shape a second tip-like end portion of a sausage-shaped product just produced and a first tip-like end portion of a new sausage-shaped product to be produced subsequently. Inner surface of displacement means 7100 define an at least approximately circular inner displacement opening 7110. Displacement means 7100 and/or displacement opening 7110 define a displacement axis A_{D}. Displacement means 7100 are configured to move between an open and a close configuration. An inner surface of displacement means 7100 is configured to engage the casing of a product to be produced in the closed configuration of displacement means 7100 during portioning of the product. In order to move from the open configuration, as shown in Fig. 13, to the closed configuration, a diameter of displacement opening 7110 is reduced by moving displacement means 7100 radially inwards. As soon as inner surfaces of displacement means 7100 engage the filled casing of the product to be produced the filling is squeezed in directions against and in the feeding direction. By moving at least one displacement means 7100 with regard to at least one stationary displacement means 7100 the filling is displaced of a portion of the casing and an at least approximately content-free plait-like portion is formed such that the corresponding portion can be closed by at least one closure clip. At least one clip is applied by clipping machine 7000 to the casing. A diameter of displacement opening 7110 is increased to move displacement means 7100 from a closed to an open configuration. During the filling process this process is repeated.

In the filling position FP as shown in Fig. 13, casing brake unit 2000 is disposed adjacent displacement means 7100. A distance between an outlet end portion of casing brake unit 2000 and a first surface of displacement means 7100 facing towards casing brake unit 2000 can be adjusted by mounting unit 5000. Setting the corresponding distance is crucial in order to prevent a filled casing from undesired sagging. Filling tube axis A_{F} and brake axis A_{B} are coaxially with displacement axis A_{D}. As soon as the casing disposed on filling tube 1200 is consumed the filling process is paused automatically or by interaction on an operator with an interaction means of clipping machine 7000.

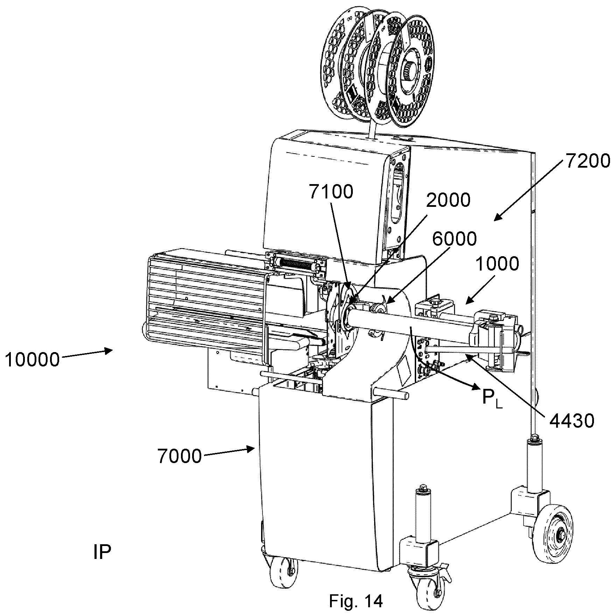

For providing new casing to filling tube 1200, an operator manually engages lever 4430. As shown in Fig. 14, pulling lever 4430 triggers casing brake unit 2000 to move axially in the feeding direction as specified above. Brake unit 2000 moves along brake axis A_{B}, which is coaxially aligned with filling axis A_{F} and displacement axis A_{D}. The diameter of displacement opening 7110 is increased by moving displacement means 7100 radially outwards in order to provide displacement means 7100 in a reload open configuration. The diameter of displacement opening 7110 in the reload open configuration can be larger than the diameter of displacement opening 7110 in the open configuration during the filling process. The movement of displacement means 7100 into the reload open configuration can be initiated by an operator. In other embodiments, this process is initiated as soon as a sensor registers a movement of lever 4430. In other embodiments, the diameter of the displacement means in the open configuration is sufficient to at least partially surround casing brake unit 2000. In other embodiments, an information about a diameter of the casing brake unit 2000 can be provided to clipping machine 7000 such that a diameter of the open of displacement opening 7110 is sufficient to at least partially surround casing brake unit 2000. Thereby, filling tubes 1200 of various diameters and/or casing brake units 2000 can be used in conjunction with clipping machine 7000. System 10000 ensures, that a diameter of displacement opening 7110 is at least slightly larger than a diameter of casing brake unit 2000. An engagement of displacement means 7100 by casing break unit 2000 during the axial movement from filling position FB to intermediate position IP of casing brake unit 2000 is avoided. By moving casing brake unit 2000 along brake axis AB, a surface of casing brake unit 2000 enters displacement opening 7110 such that casing brake unit 2000 is at least partially surrounded by displacement means 7100. Casing brake unit 2000 is at least partially disposed in displacement opening 7110.

As soon as an axial movement of casing brake unit 2000 is finished, intermediate position IP as shown in Fig. 14 is reached. In intermediate position IP, brake unit 2000 has moved sufficiently far away from filling tube inlet end portion 1600 such that filling tube outlet end portion 1600 is not surrounded by brake 2400. Casing brake unit 2000 is positioned at least partially within displacement opening 7110 defined by displacement means 7100. Optional support member 6000 is in an open configuration, wherein arc-shaped engagement portions 6110, 6210 are moved away from an outer surface of filling tube 1200. The opening defined between lower and upper portion 6100, 6200 is increased such that the smallest distance between engagement portion 6110 of lower portion 6100 and engagement portion 6210 of upper portion 6200 is slightly larger than an outer diameter of filling tube 1200.

In order to transition system 10000 from intermediate position IP to casing reload position RP, lever 4430 of filling assembly 1000 is further manually pivoted around axis P₁ in an at least approximately arc-like path P_{L} by an operator. Filling tube 1200 is pivoted around axis P₂ by interaction of guiding slot element 4200 with filling tube guidance 4900 as specified above. Filling tube axis A_{F} is pivoted with regard to brake axis AB. Casing brake unit 2000, displacement means 7100 and optional support member 6000 remain in their corresponding position of the intermediate position IP. Movement of lever 4430 is terminated by an engagement of pins 4212, 4214 with an end portion of second guiding slot sections 4211b, 4213b provided in guiding slot element 4200. System 10000 and filling assembly 1000 are in casing reload position RP. Filling tube axis A_{F} is pivoted with regard to brake axis A_{B} and displacement axis A_{D}, exposing filling tube outlet end portion 1600. In casing reload position RP, filling tube outlet end portion 1600 can be positioned within or outside cut-out 7300. A new casing can be disposed on filling tube 1200 by an operator. A first open end of new casing can be slid over filling tube inlet end portion 1600. New casing can be moved along filling axis AF against the feeding direction unit a second end portion of a new casing is disposed adjacent filling tube outlet portion 1600.

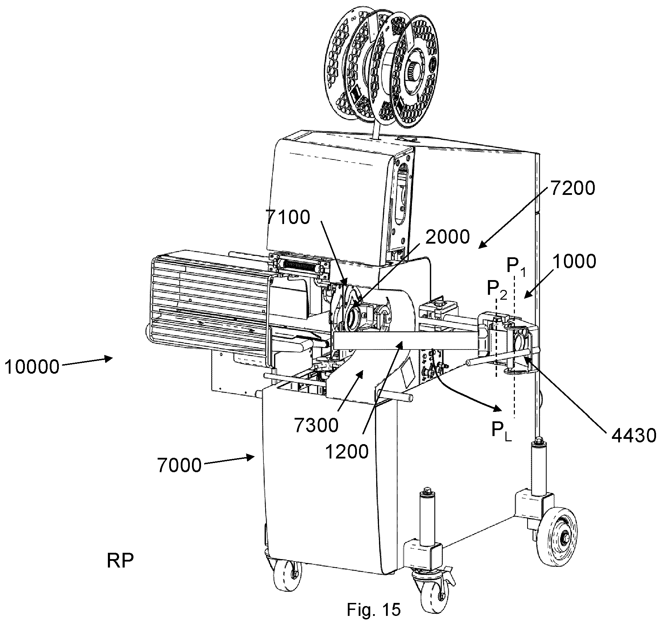

As soon as a new casing is provided on filling tube 1200, an operator manually engages lever 4430 in order to initiate the movement of system 10000 and filling assembly 1000 from the casing reload position RP to the filling position FP. Lever 4430 is pushed inwards in an at least partially arc-like movement along path P_{L}, i.e. in the opposite direction indicated by the arrow of PL in Fig. 15. Pins 4214 move within with second guiding slot section 4213b provided in guiding slot element 4200. Filling tube 1200 is pivoted inwards until intermediate positon IP is reached. In intermediate position IP filling tube axis A_{F}, brake axis A_{B} and displacement axis A_{D} are aligned.

By further pushing lever 4430 inwards, pin 4212 engages with first section 4211a of first guiding slot 4211 in guiding slot element 4200. First bearing component 3100 moves translationally along an axis parallel to brake axis AB, filling tube axis AF and displacement axis AD. Coupling of first bearing component 3100 with support member 6000 results in a decrease of an opening defined between lower and upper portion 6100, 6200. Arc-shaped engagement portions 6110, 6210 move closer to an outer surface of filling tube 1200. Arc-shaped engagement portions 6110, 6210 can engage a casing disposed on filling tube 1200 in order provide additional support to a casing. Brake unit 2000 moves translationally along brake axis AB, which is coaxial to displacement axis AD and filling tube axis AF. Brake unit 2000 moves against the feeding direction towards filling tube outlet end portion 1600.

Movement of lever 4430 is ended as soon as pins 4212, 4214 engage an end portion of first sections 4211a, 4213a of first and second guiding slots 4211, 4213 of guiding slots element 4200. Lever 4430 is at least substantially parallel to filling tube axis AF, brake axis AB and displacement axis AD. Lever 4430 can be secured, such that an non-intentional movement of lever 4430 is prevented. Brake unit 2000 is disposed adjacent filling tube end portion 1600. A first surface of brake unit 2000 is spaced from a first surface of displacement means 7100. Brake unit 2000 is disposed outside of displacement opening 7110. If displacement means 7100 are provided in a reload open configuration defining a larger displacement opening 7110 than an open configuration of displacement means 7100, displacement means 7100 move in the open configuration. The restart of the filling process can initiate be automatically or by an interaction of the operator with an interaction means of clipping machine 7000.

## Claims

1. A filling assembly (100; 1000) for being mounted to a clipping machine for producing sausage-shaped products, like sausages, the filling assembly (100; 1000) comprising:
a filling tube (120; 1200) with a filling tube axis (A_{F}), a filling tube inlet end portion (140) and a filling tube outlet end portion (160) for filling paste-like, granular and/or liquid material, in a filling process, in a feeding direction into a substantially tubular or bag-shaped packaging casing, wherein a packaging casing to be filled is configured to be arranged onto the filling tube (120; 1200) and the filling tube (120; 1200) is configured to be moved reversibly between a filling position (FB) and a casing reload position (RP);
a casing brake unit (200; 2000) with a brake axis (A_{B}) and a brake body (240; 2400) for being detachably arranged on the filling tube (120; 1200) in a filling position (FB), wherein the brake body (240; 2400) is relatively fixable to the filling tube outlet end portion (160) in the filling position (FB) and the casing brake unit (200; 2000) is axially moveable along the brake axis (A_{B}) in order to reversibly move between the filling position (FB) and the casing reload position (RP),
a mounting unit (500; 5000) configured to mount the filling tube (120; 1200) and the casing brake unit (200; 2000) to the clipping machine,
a moving device (300, 400; 3000; 4000) configured to be operated manually for reversibly moving the filling tube (120; 1200) and the casing brake unit (200; 2000) relative to the clipping machine,
wherein, when in the filling position (FB), the filling tube (120; 1200) and the casing brake unit (200; 2000) are arranged coaxially; and
wherein, for attaining the casing reload position (RP), the filling tube (120; 1200) is configured to pivot from the clipping machine around a pivot axis (P₁) and the brake unit is configured to carry out a linear movement along the filling axis, and
wherein the moving device (300, 400; 3000; 4000) comprises operating means (420; 4430) which are arranged adjacent the filling tube inlet end portion (140).

2. The filling assembly (100; 1000) of claim 1, wherein the moving device (300, 400; 3000; 4000) is configured to reduce or multiply a movement of the operating means (420; 4430) into a movement of the casing brake unit (200; 2000).

3. The filling assembly (100; 1000) of claim 1 or 2, wherein the operating means (420; 4430) are configured to carry out an arc-like movement (P_{L}) for reversibly bringing the casing brake unit (200; 2000) from the filling position (FB) to the casing reload position (RP).

4. The filling assembly (100; 1000) of any of the preceding claims, wherein the moving device (300, 400; 3000; 4000) is configured to define the movement of the casing brake unit (200; 2000) or the filling tube (120; 1200) and the casing brake unit (200; 2000).

5. The filling assembly (100; 1000) of any of the preceding claims, wherein the operating means (420; 4430) extends at least approximately parallel to the filling tube (120; 1200) in the filling position (FB) and, wherein the operating means (420; 4430) and the filling tube (120; 1200) are configured to move at last approximately within the same plane and wherein the operating means (420; 4430) is an operating lever.

6. The filling assembly (100; 1000) of any of the preceding claims, wherein the filling tube (120; 1200) is configured to be pivoted together with the moving device (300, 400; 3000; 4000) and, wherein the filling tube inlet end portion (140) comprises a tube connector (180; 1800) pivotally arranged in a calotte-shaped adapter (531; 5310) of the mounting unit (500; 5000) for pivoting around the pivot axis (P₁).

7. The filling assembly (100) of any of the preceding claims, wherein the moving device (300, 400) comprises a hinge joint (410).

8. The filling assembly (100) of claim 7, wherein the hinge joint (410) is configured to move a first mounting plate (310) relative to a second mounting plate (320), preferably, wherein the casing brake unit (200) is coupled to the first mounting plate (310) via a distance adjustment device (340), further preferably wherein the first mounting plate (310) is coupled to the second mounting plate (320) by one or more rods (311, 312) which are at least partially disposed within one or more sleeves (321, 322).

9. The filling assembly (1000) of any of claims 1 to 6, wherein the position of the operating lever determines the position of the moving unit (3000, 4000), preferably wherein the lever (4430) is pivoted with regard to a center axis of the casing brake unit (2000) and the filling tube (1200), when the filling assembly (1000) is in the casing reload position (RP).

10. The filling assembly (1000) of any of claims 1 to 6 and 9, wherein the casing brake unit (2000) comprises at least one support unit (6000) configured to at least partially circumferentially house at least a portion of the filling tube (1200), preferably wherein the support unit (6000) comprises a lower and an upper portion (6100, 6200) linked by a scissor-like mechanism, further preferably wherein the support unit (6000) is disposed between the mounting unit (5000) and the casing brake unit (2000).

11. The filling assembly (1000) of any of claims 1 to 6 and 9 to 10, wherein the moving unit comprises a first bearing component (3100), wherein the casing brake unit (2000) is coupled to a longitudinal member (3200, 3320, 3310, 3330) at a first end portion of the longitudinal member (3200, 3320, 3310, 3330) and wherein a second end portion of the longitudinal member (3200, 3320, 3310, 3330) is coupled to the first bearing component (3100), preferably wherein the longitudinal member (3200, 3320, 3310, 3330) comprises means to adjust a distance between the casing brake unit (2000) and the filling tube (1200) outlet.

12. The filling assembly (1000) of any of claims 1 to 6 and 10 to 11, wherein the moving unit comprises a guiding slot element (4200) including one or more guiding slots (4211, 4213) configured to guide a movement of the casing brake unit (2000) and the filling tube (1200), preferably wherein the moving unit comprises at least one first guiding slots (4211) configured to guide a movement of the casing brake unit and, wherein the guiding slot element (4200) comprises at least one second guiding slots (4213) configured to guide a movement of the filling tube (1200), preferably wherein the at least one second guiding slots (4213) is at least partially V-shaped such that the at least one second guiding slots (4213) comprises a first section (4213a) extending mainly in a direction parallel to the feeding direction, and a second section (4213b) extending mainly in a direction opposite to the feeding direction.

13. The filling assembly (1000) of claims 11 or 12, wherein the guiding slot element (4200) comprises a first leg portion, a second leg portion (4210) and connecting portion connecting the first and second leg portion (4210), preferably wherein the first leg portion and the second leg portion (4210) extend at least approximately parallel to the lever (4430) and the filling tube movement plane, further preferably wherein the first leg portion comprises the at least one first guiding slots (4211) and the second leg portion (4210) comprises the at least one first guiding slots (4211) and the at least one second guiding slots (4213).

14. A system comprising:
a filling assembly (100; 1000) according to any of claims 1 to 13, and
a clipping machine.

15. The system of claim 14, wherein the clipping machine comprises at least one displacing means configured to displace a paste-like, granular and/or liquid material filled into a substantially tubular or bag-shaped packaging casing, preferably wherein the at least one displacing means is configured to be arranged in a position configured to at least partially surround the casing brake unit (2000) and wherein, when in the casing reload position (RP), the casing break unit is at least partially circumferentially surrounded by the at least one displacing means.
